# EUROPEAN PATENT APPLICATION

(11) **EP 1 691 338 A1**
(43) Date of publication of application: **16.08.2006**
(21) Application number: 05290317.6
(22) Date of filing: 14.02.2005
(51) Int. Cl.: G07F 7/10

(54) **Method for diversifying a protective key in an authentication token**

(71) Applicant: Axalto S.A., 92120 Montrouge (FR)
(72) Inventor: Amador, Eric c/o Axalto SA, 92120 Montrougo (FR)
(74) Representative: Jacquot, Ludovic R. G.

(57) **Abstract**

This invention relates to a method for replacing a collective key (K, Km) present in an authentication token by a diversified key (Kd₁, Kd₂, ..., Kdₙ), said method comprising a first step which consists in acquiring a master key (Km), a second step which consists in acquiring a unique data identifying the token (Id₁, Id₂, ..., Idₙ), and a third step which consists in performing a calculation on the basis of said a master key (Km) and said unique data (Id₁, Id₂, ..., Idₙ) so as to provide a unique diversified key (Kd₁, Kd₂, ..., Kdₙ) and store it in the token, characterized in that said first, second and third steps are performed in the token.

## Description

The invention deals with retrievable authentication tokens such as smart cards.

As is well known the sensitive part of the content of such authentication tokens is typically protected by keys. Said keys are introduced at some steps of the manufacturing of the token.

More particularly, a plurality of keys use to be introduced in the card, and some keys which are introduced afterwards use to replace the keys which were previously introduced in the card. An afterwards introduced key is typically more secure than the key which is replaced.

As a particular example of such prior key which has to be replaced, one is particularly related to by the present invention, which key is widely known as the founder key. The founder key is typically the very first key to be introduced in the card, either by loading into the card a piece of software containing said key, either by physically configuring the memory of the card at the physical part of the manufacturing process.

This founder key is not diversified, i.e. it is not unique nor particular to a given chip. Indeed the founder key is introduced in the chip through a manufacturing step which is widely repeated on a whole batch of chips.

At a later stage, typically customizing or microelectronic stage, the founder key is replaced by a diversified key. The diversified key is loaded from a diversifying equipment known as a HSM.

Several shortcomings arise from such a process and from any other process of this type for diversifying a collective key in an authenticating token.

One shortcoming lies in the fact that a collective key may become easily available to the personals on the manufacturing site, for instance the founder site. The same remark can be made as to the research and developpement teams who define such key before providing it to the founder's manufacturing site. Such a handling of a collective key may therefore appear unsufficiently secured as to the risk of theft of the cards by a fraudulous person.

Knowing the collective key, such fraudulous person would hold a card the content of which will be quite fully available via the collective key not only for reading the data in the card but furthermore for writing any fraudulous content. Such a misprotected card would become a tool for obtaining non authorized rights by said fraudulous holder such as rights for cash, bank account consulting, telephony, access to securised areas. It therefore appears a need for upgrading the level of security surrounding the handling of collective keys in particular at the level of manufacturing smart cards and more generally authentication tokens.

Another shortcoming lies in the fact that the use of the diversifying tools of the art consists in a very expensive stage. The most widely used such tools i.e. HSM modules use to induce costs not only for purchase, but also for sustaining and upgrading the softwares run in such HSM modules.

The diversifying stage is also expensive on a logistical aspect. Indeed, as far as the HSM modules are costly, the number of HSM modules is quite reduced and therefore the whole flow of authentication tokens must pass through a small number of such HSM modules. Logistical inadequacies arise therefrom such as time-offs, tricky displacement paths and unforeseen overloads on manufacturing lines. Such inadequacies are expensive and tricky.

The aim of the invention is to supply a solution to one or several of the previously recited shortcomings.

Such solution is proposed according to the invention through the method and device as recited in the appended claims.

Other features and advantages of the present invention will become apparent from the following description which will be taken in conjunction with the accompanying drawings.

In the drawings :
Figure 1 depicts three main phases constituting a manufacturing process of smart cards, said manufacturing process of figure 1 pertaining to the prior art.
Figure 2 depicts three main phases constituting a manufacturing process of smart cards according to a preferred embodiment of the invention

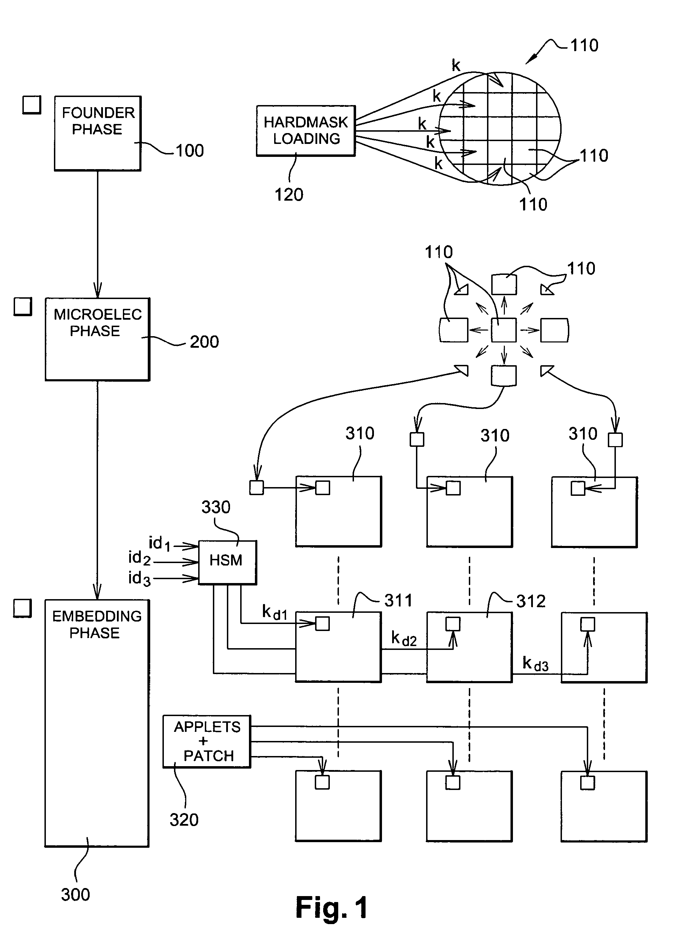

As illustrated on figure 1, manufacturing of cards according to prior art relies mainly on three phases which will be hereafter referenced 100, 200 and 300.

A first manufacturing phase is the founder phase 100.

Founder phase 100 consists in physically realizing the chips 110 and introducing in the chips a first basic part of logic means called the hard mask 120 of the card.

The founder is the manufacturer of the chips 110. The result of the founder phase is typically a batch of chips, i.e. a series of chips 110 which are still contiguous to each other because still unseparated physically from each other.

Said chips 110 will have to be separated from each other before being associated with a card body, i.e. a plastic sheet.

The hard mask 120 is a logic entity which is introduced in each chip 110 by the founder during the founder stage 100. The hard mask 120 can be fully constituted by a software package which is loaded on the chip 110 by software means. In another embodiment, the hard mask 120 is at least partly introduced on the chip 110 as a physical configuration of the chip 110 itself during the physical manufacturing of the chip 110.

The hard mask 120 typically contains an operating system of the smart card.

At the founder phase 100, a basic key K known as the founder key (or possibly a plurality of founder keys in a same card) is introduced before any sensitive data in the card. The founder key K is usually seen as the initial protective key for such data.

Furthermore the role of such founder key K is mainly to avoid that the card, in case of theft during production or during transportation between the founder and the micro electronic production site, may have the ability to be loaded by a non-authorized person for example with fraudulous data and thereby become a tool for fraudulous behaviors.

The founder key K is a collective key and therefore provides a quite low level of security as far as its unchanging value is widely handled i.e: handled for the manufacturing of huge amounts of consecutive chips 110 on the manufacturing site. Such collective key K can therefore be picked-up too easily at the founder phase 100 or subsequently during such wide handling of the key.

The founder key K is, at some subsequent step which will be described below, replaced by another more complex key which becomes different and specific to each card. Such replacement step of the collective key into a specific key is called diversification. Such specific key is called the diversified key and will be referenced Kd₁, Kd₂, ... Kdₙ in the following.

The second phase of the manufacturing process is the microelectronic phase 200.

Microelectronic phase 200 is carried out after the founder phase 100. Micorelectronic phase 200 is performed by the card manufacturer. It consists specifically in separating the chips 110 from the batch of chips and performing some physical operations on the separated chip 110, such as placing connections on the chip 100.

The third manufacturing phase is embedding phase 300.

Embedding phase 300 is also carried out by the card manufacturer. It comes after the microelectronic phase 200, and consists in physically associating a stand-alone chip 110 with a corresponding card body 310. Embedding phase typically comprises a sub-step of placing a glue interface between the chip 110 and the card body 310. The embedding phase may also comprise a software loading step, which consists typically in loading applets or other pieces of code typically called "patches" 320 into the chip 110.

The embedding phase 300 includes intervention of an HSM 330 before loading the applets and patch 320. During this intervention the HSM 330 calculates a diversified key Kd₁, Kd₂, ... Kdₙ and loads it into the chip 110 of each corresponding card 311, 312,... . The diversified key Kd₁, Kd₂, ... Kdₙ is calculated on the basis of the collective key K i.e. the founder key in the present example which is already in the chip 110. The diversified key Kd₁, Kd₂, ... Kdₙ is calculated also on the basis of an identification number Id₁, Id₂,...Idₙ of the card which is supplied to the HSM 330 from an external device. The identification number Id₁, Id₂, ....Idₙ is loaded into each corresponding chip by the HSM 330 together with the diversified key Kd₁, Kd₂, ... Kdₙ. However the identification number Id₁, Id₂ .... Idₙ can be read into the card by an external device whereas the diversified key Kd₁, Kd₂, ... Kdₙ is not available in reading to any type of machine. The HSM 320 keeps the value of the diversified key Kd₁, Kd₂, ... Kdₙ so as to be able to access to the resources of the card subsequently, i.e. when subsequently loading the applets and patch 320 or even at customizing stage non represented for loading customizing software. The phase known as the customizing phase comes after the embedding phase and consists in loading software in the card which is specifically ordered by the client, i.e. the phone operator. Such specifically ordered software typically includes Java applets, software interfaces for communication, phonebook items, logos to be displayed on the phone, etc...

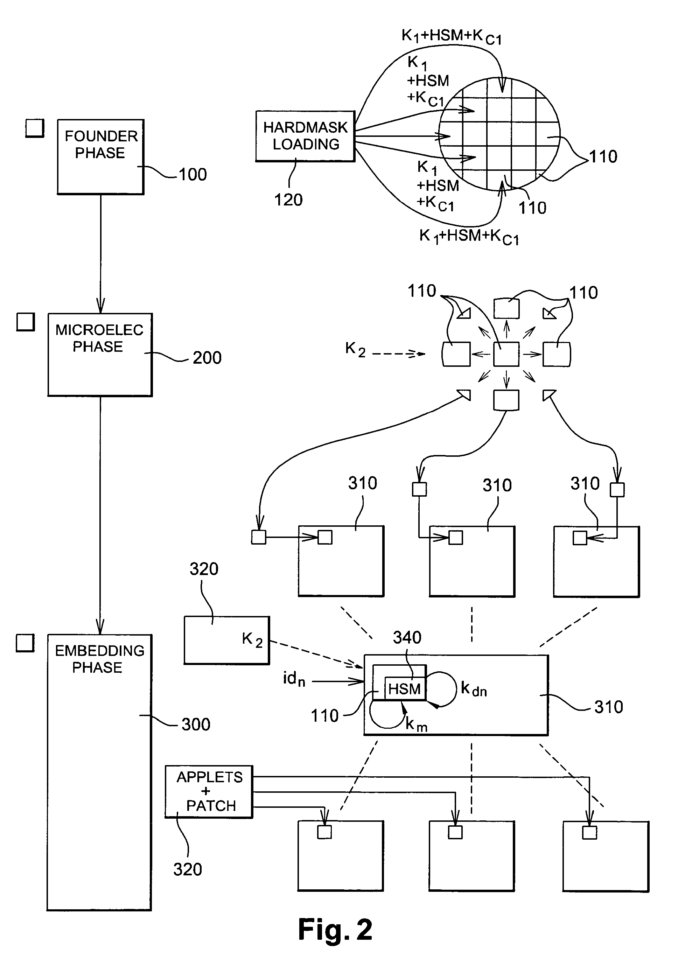

An embodiment of the invention will now be described in reference to figure 2 in which the same references will be used for similar elements to those previously described.

As explained before, the collective key K known as founder key is introduced in the card by the founder after having been set by an R&D team. Thus the founder key K is known by the R&D team and by the founder.

More precisely, the protection key which is usually included in the source code of the hard mask 120 can be protected only by any security technique that may possibly be applied to a source code and therefore such confidentiality is very difficult to manage.

We introduce hereafter the concept of initial card master protection key Km rather than founder key K : the master protection key Km is introduced in the card by parts K1 and K2 and is activated only after a successful recombination of those two parts K1 and K2.

One of the parts K1 is introduced by the founder and can therefore be called the founder part. Thus the founder knows only one part K1 of the master card protection key Km. Such founder part K1 is introduced in the chip 110 of the card in the same way as the previously described founder key K. To this end the founder part K1 of the master protection key Km is contained in the source code of the hard mask 120.

The hard mask 120 also includes a key check value Kc which will serve as a checking tool as to the efficiency of the forecasted recombination of the different parts K1, K2 of the master protection key Km. Key Check Value will be truncated so that it can not be used to reveal the combined key value but will be kept long enough to give a good confidence of such a recombination result.

At founder step 100, a function is provided in the hard mask 120 and into the chip 110 that will be able later to recombine the founder part K1 of the master key Km with the complement part K2 of master key Km when such complement part K2 will be provided at a later step as will be described hereafter.

Such recombination function is also adapted for calculating a second key checking value Kc₂ on the basis of the master key Km obtained through recombination. Such second key checking value Kc₂ will be compared to the prememorised key checking value Kc and if the two key checking values correspond to each other, then this will ensure that there is a high probability that to the expected master key has been obtained, i.e. that K1 and K2 as recombined were the two values which were intended to each other. In other words this will ensure that no mistake has been made by combining unrelated K1 and K2 values.

So as to perform such separate introduction of K1 and K2 and later recombine K1 and K2, a preliminary key management session is performed which consists in generating the master protection key Km in two parts K₁ and K₂ as well as the key checking value which has to be obtained after recombination.

First part K₁ of the master protection key Km and the first key checking value Kc is given to the R&D team that stores K₁ as well as kc into the hard mask 120.

More specifically, K₁ and kc are advantageously stored in the source code of the previously described key recombination function in the hard mask 120.

The full master protection key Km is known by the very up parts of the R&D team from the beginning i.e. from the generating step of the master protection key Km. It remains protected at this level of the R&D team thanks to a particular HSM non represented on figure 2, said HSM being dedicated to said protection of the master protection key Km.

The confidentially kept full master protection key Km will be transmitted to the customizing teams so as to be used to access the card at the customizing phase, once the master key will be activated.

Chips are thereby created by the founder with first part K₁ of master key Km and first key checking value kc.

At founder step, the card is also equipped with protective software which does not allow any access to resources of the chip.

K₁ although present in the card constitutes no access key but only a part necessary for a recombination function in the chip in order to constitute a master protection key Km. Km will then become the only key able to authorize access to the chip.

The protective software will become receptive an access key only once the master key Km becomes recombined in the card. So as to become active, Km is generated preferably by such recombination in the chip and is then enabled i.e. stored as associated active protection key to the protective software which has been previously loaded in the chip at founder step. Said protective software and said master key constitute protective logical means which are placed in the card through two separated steps and preferably by different persons, i.e. the founder and the card manufacturer. Although the software part of the protective means is loaded as a whole at the founder step, said software part of the protective means could also be placed through two steps in the chip the same way as the key part of the protective logical means.

Thanks to the first loaded part of the protective logical means, the card offers no way of access to its resources before enabling of the key.

At embedding phase 300, an embedding script 320 is provided by an external device, which embedding script 320 mainly consists in usual software entities typically introduced at this stage in the chip 110 of the card.

The embedding script 320 however specifically contains in the present example the second part K₂ of the master card protection key Km so that K₂ becomes introduced in the chip 110 with the embedding script 320.

To this end, second part K₂ of master key Km is given to R&D members in charge of producing the embedding scripts 320 (hard mask development).

Alternatively, K₂ can be introduced in the chip at the microelectronic stage 200. To this end K₂ is for example introduced in a script which has to be written in the chip at the microelectronic stage 200.

During micro-electronic phase 200 or during embedding phase 300, the hard mask function to recombine the master key Km is triggered once second part K₂ is introduced in the chip.

Recombination preferably consists in a calculation which is complex enough for preventing anybody from finding the value of Km when departing from the values of K₁ and K₂. Many types of such calculations exist which are suitable for the present preferred embodiment of the invention.

To this end a recombination triggering command is sent to the card, preferably simultaneously to the loading of the second and last part K₂ of the master key Km.

After recombination, a calculation is advantageously performed by the chip of the card which is based on the value of the recombined key Km and provides a result value constituting a key checking value Kc. If said calculated key checking value Kc matches the first key checking value K_{C1} which was stored into the chip 110 at the founder stage 100, the master key Km is enabled, i.e. stored in the card as active i.e. stored in the card at a place where it can be called and used by the software part of the protective logical means.

Enabling of the newly obtained master protection key Km, i.e. storing of such protection key Km as active with the protective software of the card can also be realized without prior checking.

In such case a risk exists that a wrong part K₂ be associated with part K₁ due to logistic inadequacies and that such inadequacy be due to a mistake which may be then non detected to the disadvantage of the manufacturing and distributing proceses.

Said calculation of the key checking value Kc, match checking between calculated and prestored keys Kc and Kc₁, and enabling of recombined key Km are run by the processing means of the chip on the basis of in-card stored logic functions.

If recombination fails and/or is the key checking values Kc and Kc1 do not match, then a recombination failure counter of the card is incremented up to a maximum value set into the hard mask 120 of the card. When maximum failure number is reached by the counter then the card status is set to compromised.

At embedding phase 300, a card unique identifier idₙ, is provided by an external device and is also written into the chip 110 of the card.

The card unique identifier is accessible in read mode without any condition. To this end a function is introduced in the card which returns the value of the unique card identifier.

The card unique identifier idₙ is then used for a diversification process which will be described hereafter and which is performed once successful master key recombination has been achieved.

To the end of permitting an efficient diversification process, another piece of software 340 is introduced in the chip during the previously described founder stage 100, which proceeds to diversification of the protective key Km. Such piece of software 340 performs the same logical function as the known HSM modules of the prior art.

However, such piece of software 340 is in the present case stored and run in the chip 110 of the card.

Such in-card HSM 340 uses two parameters as inputs for the diversifying calculation. First input is the master protection key Km as already present in the chip. lndeed master protection key Km is generated in the card from the recombination step previously performed. Second input for diversification is the card unique identifier idₙ which has been introduced in the card with the second part of the master protection key K2.

Performing of the diversifying operation advantageously depends on the previous enabling of the recombined master protection key Km.

If the master protection key Km is not enabled the diversify function will return error.

If master protection key Km is enabled then diversify function is run in the chip 110 with the unique card identifier as input diversifier parameter and with the master protection key as input key parameter.

The diversified key is are then enabled to be used for the security functions of the card in replacement of the collective master protection key.

The HSM or diversifying software 340 is loaded in the chip during the founder stage 100 as part of the source code of the hard mask 120. The in-card diversifying software may also include a sub-function which auto-launches just after diversification for forbidding any other diversification process. This way it is ensured that the diversified key is not fraudulously altered after the due diversification.

In the present embodiment of the invention, only the diversified key can be used for security as far as the collective key or master protection key is diversified immediately after recombination i.e. immediately after having been diversified. Indeed in the present case the card is preferably self-triggering as to diversification thanks to the fact that the diversifying software is stored and run in the card.

By the fact that the diversified protection key is derived by the processing means of the card themselves no external HSM module such as module 330 of figure 1 is necessary anymore for this operation.

This way, the cost of the usual external HSM modules such as module 330 is saved, and no uncomfortable logistical concern remains as to the flow of cards arriving to the few available HSM 330. The diversifying of the collective key i.e. the present master protection key Km or any other collective key such as the usual founder key K itself can be realized without any external device, i.e. at any moment and independently of availability considerations.

In addition, updating of HSM functions does no more require to carry out any task on the manufacturing site itself such as interrupting and accessing to the usual HSM modules 330 on the site for maintenance.

The updating of the HSM can be performed at the R&D level and updating data then solely transmitted to the manufacturing site so as to be introduced in the cards.

Introduction of a collective key by several parts and/or diversification by in-card means are independent technical aspects which can be adopted independently from each other in different products.

Introduction of a collective key by several parts and/or diversification by in-card means have been described in connection to the founder key and diversification thereof. The invention deals more generally to keys which may be introduced in authentication tokens, and which are the same for a whole batch of produced tokens and subject to a subsequent step which consists in replacing such collective key by a diversified key.

A typical example of such collective key other than the founder key is to be found in collective keys which are introduced in the card by manufacturing places other than the founder facilities, which collective keys may have to be replaced by diversified keys at a later step.

Such an example of collective key to which the invention can apply can be for example some keys which protect a software entity loaded at the manufacturer's facility.

## Claims

1. A method for replacing a collective key (K, Km) present in an authentication token by a diversified key (Kd₁, Kd₂, ..., Kdₙ), said method comprising a first step which consists in acquiring a master key (Km), a second step which consists in acquiring a unique data identifying the token (Id₁, Id₂, ..., Idₙ), and a third step which consists in performing a calculation on the basis of said a master key (Km) and said unique data (Id₁, Id₂, ..., Idₙ) so as to provide a unique diversified key (Kd₁, Kd₂, ..., Kdₙ) and store it in the token, **characterized in that** said first, second and third steps are performed in the token.

2. The method according to claim 1, **characterized in that** the master key (Km) is a key which is already present in token and which is collective to a plurality of tokens.

3. The method according to claim 1, **characterized in that** it includes a preliminary treatment which consists in introducing logical protective means comprising said collective key (Km) in a series of retrievable authentication tokens each token including memory and processing means said protective logical means being common to said series of authentication tokens (310), said protective logical means comprising the collective key (Km) and comparing software means for comparing a key which is submitted to the token with the collective key (Km) so as to allow access to a predetermined content of the token when said submitted key corresponds to the memorized key, said method for introducing the logical protective means including two different steps a) and b), which consist in:
a) introducing first protective logical means in the token which include a sub-part (K1) of the collective key said first protective logical means being efficient for preventing access to said predetermined content,
b) introducing complement protective logical means in the token which include a complement part (K2) of the collective key (Km) so that the protective logical means become able to perform a key comparing function allowing access to the said predetermined memory area when a submitted key corresponds to the collective key.

4. The method according to claim 3, **characterized in that** said comparing software means of the protective logical means are introduced in the token at step a).

5. The method according to claim 3, **characterized in that** said first protective logical means refuse access to said predetermined content in response to sole submission to the token of the value of said sub-part of the key.

6. The method according to claim 3, **characterized in that** said first protective logical means include said software for comparing a key submitted to the token with a collective key (Km) to be memorized in the token so as to allow access to a predetermined content of the token when said submitted key corresponds to the memorized key (Km), which software remains unable to perform said comparing until the collective key is generated in the token at step b).

7. The method according to claim 3, **characterized in that** it includes a step c) which consists in :
c) recombining said sub-part (K1) and said complement part (K2) of collective key in the token so as to generate said collective key (Km) in the token.

8. The method according to claim 3, **characterized in that** at step a), a key check value (Kc1) is introduced in the token, and the token includes security checking means which perform a check calculation after said complement part (K2) of the collective key (Km) is introduced, which check calculation generates a result (Kc) value on the basis of said sub-part (K1) of the collective key (Km) and said complement part (K2) of the collective key, said security checking means then comparing said result value with the control value which has been introduced at step a), the token being discarded if said two values (Kc1, Kc) are different.

9. A system comprising a retrievable authentication token and a module for replacing a collective key (K, Km) present in the authentication token by a diversified key (Kd₁, Kd₂, ..., Kdₙ), said module comprising means for acquiring a master key (Km), means for acquiring a unique data identifying the token (Id₁, Id₂, ..., Idₙ), and means for performing a calculation on the basis of said master key (Km) and said unique data (Id₁, Id₂, ..., Idₙ) so as to provide a unique diversified key (Kd₁, Kd₂, ..., Kdₙ) and store it in the token, **characterized in that** said means for acquiring a master key (Km), said means for acquiring a unique data identifying the token (Id₁, Id₂, ..., Idₙ), and said means for performing a calculation on the basis of said master key (Km) and said unique data (Id₁, Id₂, ..., Idₙ) so as to provide a unique diversified key (Kd₁, Kd₂, ..., Kdₙ) are stored and run in the token.
